# EUROPEAN PATENT SPECIFICATION

(11) **EP 4 302 496 B1**
(45) Date of publication and mention of the grant of the patent: **28.10.2026**
(21) Application number: 21710921.4
(22) Date of filing: 05.03.2021
(51) Int. Cl.: H04W 4/40, H04L 5/00, H04L 47/2408, H04L 47/2441, H04L 47/2475, H04L 47/2483, H04W 76/28, H04W 28/02, H04W 52/02

(54) **TRAFFIC COMMUNICATION PATTERN MAPPING**
VERKEHRSKOMMUNIKATIONSMUSTERABBILDUNG
MISE EN CORRESPONDANCE DE MOTIF DE TRAFIC DE COMMUNICATION

(43) Date of publication of application: 10.01.2024
(73) Proprietor: Lenovo (Singapore) Pte. Ltd., Singapore 556741 (SG)
(72) Inventor: PATEROMICHELAKIS, Emmanouil, 81245 Munich (DE); KARAMPATSIS, Dimitrios, Middlesex HA4 (GB)
(74) Representative: Openshaw & Co.
(86) International application number: PCT/EP2021/055652
(87) International publication number: WO 2022/184277

(56) References cited:
- US-A1- 2020 383 127
- "3rd Generation Partnership Project; Technical Specification Group Services and System Aspects; Study on architecture enhancements for 3GPP support of advanced Vehicle-to-Everything (V2X) services; Phase 2 (Release 17)", no. V1.0.0, 30 November 2020 (2020-11-30), pages 1 - 29, XP051961755, Retrieved from the Internet <URL:https://ftp.3gpp.org/Specs/archive/23_series/23.776/23776-100.zip 23776-100.docx> [retrieved on 20201130]
- "3rd Generation Partnership Project; Technical Specification Group Services and System Aspects; Architecture enhancements for 5G System (5GS) to support Vehicle-to-Everything (V2X) services (Release 16)", vol. SA WG2, no. V16.5.0, 17 December 2020 (2020-12-17), pages 1 - 58, XP051999847, Retrieved from the Internet <URL:https://ftp.3gpp.org/Specs/latest/Rel-16/23_series/23287-g50.zip 23287-g50.docx> [retrieved on 20201217]

## Description

### FIELD

The subject matter disclosed herein relates generally to wireless communications and more particularly relates to traffic communication pattern mapping.

### BACKGROUND

In certain wireless communications networks, a vehicle user equipment may communicate with a pedestrian user equipment for traffic efficiency and safety-related applications. Communication between the vehicle user equipment and the pedestrian user equipment may be energy inefficient while accommodating the traffic efficiency and safety related application requirements.
"3rd Generation Partnership Project; Technical Specification Group Services and System Aspects; Study on architecture enhancements for 3GPP support of advanced Vehicle-to-Everything (V2X) services; Phase 2 (Release 17)", 3GPP TR 23.776, November 2020, discloses 5G System enhancements based on what has been specified in Rel-16, for enhanced support of V2X operation for pedestrian UEs (i.e. UEs for Vulnerable Road Users), e.g. V2X communication with power efficiency, according to vehicular services requirements defined in TS 22.185 and TS 22.186.
"3rd Generation Partnership Project; Technical Specification Group Services and System Aspects; Architecture enhancements for 5G System (5GS) to support Vehicle-to-Everything (V2X) services (Release 16)", 3GPP TS 23.287, December 2020, specifies architecture enhancements to the 5G System to facilitate vehicular communications for Vehicle-to-Everything (V2X) services, over a PC5 reference point and a Uu reference point.
US2020383127A1 discloses a base station (BS) receives an indication of a traffic pattern for application traffic. The BS determines one or more parameters for at least one of a discontinuous reception (DRX) configuration for the application traffic, or a semipersistent scheduling (SPS) configuration for the application traffic. The BS transmits to a user equipment, that is to receive the application traffic, an indication of the at least one of the DRX configuration or the SPS configuration.

### BRIEF SUMMARY

The invention is defined by the appended independent claims. Further embodiments are defined by the dependent claims.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for traffic communication pattern mapping;
Figure 2 is a schematic block diagram illustrating one embodiment of an apparatus that may be used for traffic communication pattern mapping;
Figure 3 is a schematic block diagram illustrating another embodiment of an apparatus that may be used for traffic communication pattern mapping;
Figure 4 is a schematic block diagram illustrating one embodiment of a communication system;
Figure 5 is a communications diagram illustrating one embodiment of communications for traffic communication pattern mapping;
Figure 6 is a communications diagram illustrating another embodiment of communications for traffic communication pattern mapping;
Figure 7 is a communications diagram illustrating a further embodiment of communications for traffic communication pattern mapping; and
Figure 8 is a flow chart diagram illustrating one embodiment of a method for traffic communication pattern mapping.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

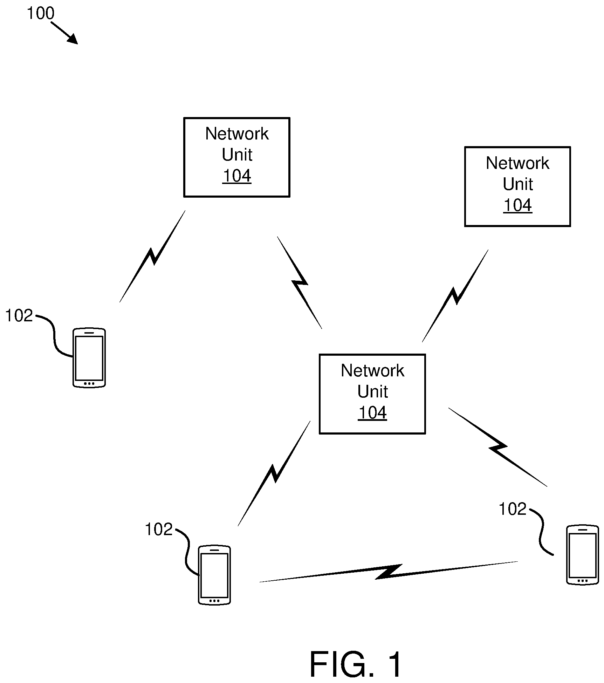

Figure 1 depicts an embodiment of a wireless communication system 100 for traffic communication pattern mapping. In one embodiment, the wireless communication system 100 includes remote units 102, and network units 104. Even though a specific number of remote units 102, and network units 104 are depicted in Figure 1, one of skill in the art will recognize that any number of remote units 102, and network units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), aerial vehicles, drones, or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the network units 104 via UL communication signals. In certain embodiments, the remote units 102 may communicate directly with other remote units 102 via sidelink communication.

The network units 104 may be distributed over a geographic region. In certain embodiments, a network unit 104 may also be referred to and/or may include one or more of an access point, an access terminal, a base, a base station, a Node-B, an evolved node-B ("eNB"), a 5G node-B ("gNB"), a Home Node-B, a relay node, a device, a core network, an aerial server, a radio access node, an access point ("AP"), new radio ("NR"), a network entity, an access and mobility management function ("AMF"), a unified data management ("UDM"), a unified data repository ("UDR"), a UDM/UDR, a policy control function ("PCF"), a radio access network ("RAN"), a network slice selection function ("NSSF"), an operations, administration, and management ("OAM"), a session management function ("SMF"), a user plane function ("UPF"), an application function, a vehicle-to-everything configuration function, an vertical application enabler server, an edge enabler server, an edge configuration server, a mobile edge computing platform function, a mobile edge computing application, or by any other terminology used in the art. In some embodiments, the network unit 104 may be any device and/or function that is not a remote unit 102 (e.g., separate from a remote unit 102). The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with NR protocols standardized in third generation partnership project ("3GPP"), wherein the network unit 104 transmits using an OFDM modulation scheme on the downlink ("DL") and the remote units 102 transmit on the uplink ("UL") using a single-carrier frequency division multiple access ("SC-FDMA") scheme or an orthogonal frequency division multiplexing ("OFDM") scheme. More generally, however, the wireless communication system 100 may implement some other open or proprietary communication protocol, for example, WiMAX, institute of electrical and electronics engineers ("IEEE") 802.11 variants, global system for mobile communications ("GSM"), general packet radio service ("GPRS"), universal mobile telecommunications system ("UMTS"), long term evolution ("LTE") variants, code division multiple access 2000 ("CDMA2000"), Bluetooth^{®}, ZigBee, Sigfoxx, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

In various embodiments, a remote unit 102 and/or a network unit 104 may receive, at a first unit, application requirements for a vehicle to everything service, wherein the application requirements comprise an application traffic pattern, an application quality of service requirement, a quality of experience requirement, or a combination thereof. In some embodiments, the remote unit 102 and/or the network unit 104 may determine a traffic communication pattern for at least one application and at least one interface based at least partly on the application requirements. In various embodiments, the remote unit 102 and/or the network unit 104 may map the traffic communication pattern to a quality of service requirement, a discontinuous reception configuration parameter, an access stratum layer configuration parameter, or some combination thereof. In certain embodiments, the remote unit 102 and/or the network unit 104 may transmit information comprising the traffic communication pattern, the quality of service requirement, the discontinuous reception configuration parameter, the access stratum layer configuration parameter, or some combination thereof to a second unit or application corresponding to the information. Accordingly, the remote unit 102 and/or the network unit 104 may be used for traffic communication pattern mapping.

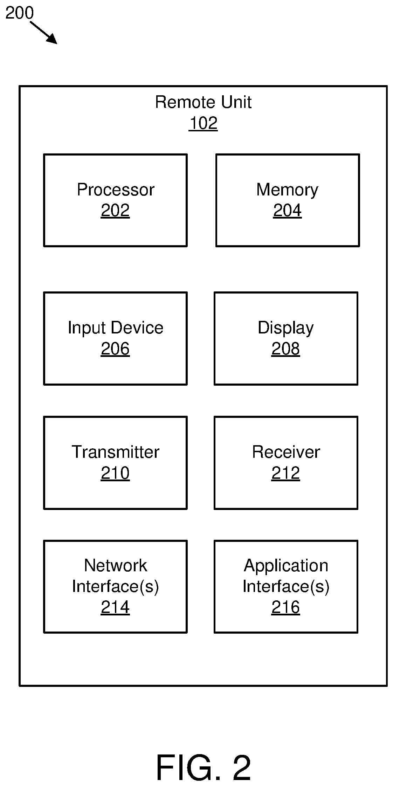

Figure 2 depicts one embodiment of an apparatus 200 that may be used for traffic communication pattern mapping. The apparatus 200 includes one embodiment of the remote unit 102. Furthermore, the remote unit 102 may include a processor 202, a memory 204, an input device 206, a display 208, a transmitter 210, a receiver 212, one or more network interfaces 214, and one or more application interfaces 216. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, a liquid crystal display ("LCD"), a light emitting diode ("LED") display, an organic light emitting diode ("OLED") display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

In one embodiment, the receiver 212 receives application requirements for a vehicle to everything service, wherein the application requirements comprise an application traffic pattern, an application quality of service requirement, a quality of experience requirement, or a combination thereof. In various embodiments, the processor 202: determines a traffic communication pattern for at least one application and at least one interface based at least partly on the application requirements; and maps the traffic communication pattern to a quality of service requirement, a discontinuous reception configuration parameter, an access stratum layer configuration parameter, or some combination thereof. In some embodiments, the transmitter 210 transmits information comprising the traffic communication pattern, the quality of service requirement, the discontinuous reception configuration parameter, the access stratum layer configuration parameter, or some combination thereof to a second unit or application corresponding to the information.

Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

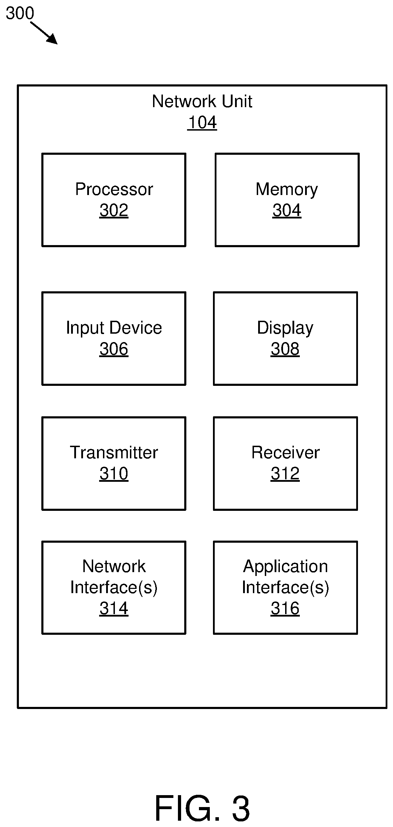

Figure 3 depicts another embodiment of an apparatus 300 that may be used for traffic communication pattern mapping. The apparatus 300 includes one embodiment of the network unit 104. Furthermore, the network unit 104 may include a processor 302, a memory 304, an input device 306, a display 308, a transmitter 310, a receiver 312, one or more network interfaces 314, and one or more application interfaces 316. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In one embodiment, the receiver 312 receives application requirements for a vehicle to everything service, wherein the application requirements comprise an application traffic pattern, an application quality of service requirement, a quality of experience requirement, or a combination thereof. In various embodiments, the processor 302: determines a traffic communication pattern for at least one application and at least one interface based at least partly on the application requirements; and maps the traffic communication pattern to a quality of service requirement, a discontinuous reception configuration parameter, an access stratum layer configuration parameter, or some combination thereof. In some embodiments, the transmitter 310 transmits information comprising the traffic communication pattern, the quality of service requirement, the discontinuous reception configuration parameter, the access stratum layer configuration parameter, or some combination thereof to a second unit or application corresponding to the information.

In certain embodiments, a discontinuous reception ("DRX") cycle and/or application transmission cycle may be optimally configured based on vehicle to pedestrian ("V2P") application requirements (e.g., for energy efficiency and/or pedestrian UE safety) and transmission mode (e.g., unicast, groupcast, broadcast).

In some embodiments, vehicle to everything ("V2X") services have ultra-reliable and low latency characteristics, and may require high data rates due to the very high expected payloads. In various embodiments, categories of requirements ("CoR") and level of automation ("LoA") may reflect functional aspects of technology and affect system performance requirements. to support such V2X scenarios.

In certain embodiments, ITS provides application requirements and mechanisms for enabling cellular-assisted communication among vehicles in V2X communications for both safety and traffic efficiency related applications.

In various embodiments, there may be vulnerable road user protection applications ("VRUP") in which warnings to vehicles are provided to indicate the presence of vulnerable road users (e.g., pedestrian or cyclist) if there is a dangerous situation.

Table 1 shows various use cases for VRUP.

**Table 1**

| Use case category | Description |
|---|---|
| Category A | Direct VRUs communication. In this case, the VRUs are equipped with a device (VRU-Tx, VRU-Rx, or VRU-St configuration) embedding at least one ITS-S. |
| Category B | Direct VRU to vehicle communication. The VRU is equipped with a device (VRU-Tx, VRU-Rx, or VRU-St configuration) embedding at least one ITS-S; the vehicle is also equipped with an ITS-S compliant with the relevant VRU standards. |
| Category C | Assistance of a third party (a vehicle) detecting a hidden VRU and signaling it to other vehicles. The VRU may not be equipped (VRU or VRU-Tx configuration) while the vehicles have an ITS-S complying with the VRU standards. |
| Category D | Assistance of a third party (a road side equipment "RSE") detecting a hidden VRU and signaling it to approaching vehicles. The VRU may not be equipped (VRU or VRU-Tx configuration) while the RSE and vehicles are equipped with ITS-S complying with VRU standards. |
| Category E | Assistance of a third party (a control center or cloud server) monitoring the evolution of VRUs. The VRUs may be equipped with an ITS-S (VRU-Tx, VRU-Rx, or VRU-St configuration) complying with VRU standards, detecting risks of collisions with monitored vehicles and then acting to avoid collision (sending alarm or collision avoidance instructions). RSE and vehicles are equipped with ITS-S complying with VRU standards. Category F Assistance of a third party (an RSE) monitoring the evolution of VRUs equipped with an ITS-S (VRU-Transmission ("Tx"), VRU-Reception ("Rx"), or VRU-Station ("St") configuration) complying with VRU standards, detecting risks of collisions with monitored vehicles and then acting to avoid collision (sending alarms or collision avoidance instructions). RSE and vehicles need to be equipped with ITS-S complying with VRU standards. Edge computing is part of this category. |

In some embodiments, V2P communication may be in category B in which a road side unit ("RSU") and vehicle directly interact for awareness. In category B, use cases may be related to: 1) active roadwork where vehicles provide CAM and/or DENM messages to workers and/or pedestrians - standard vulnerable road user ("VRU") messages may be continuously broadcasted; 2) VRU crossing a road, where the VRU user sends VRU standard messages continuously or based on context perception (e.g., CPM), and receives collision warnings via CAM messages if there is risk; 3) rider is ejected from a motorbike; 4) emergency electronic brake light; and/or 5) motorcycle approach indication and/or motorcycle approach warning.

In certain embodiments, there may be a VRU standard message named a vulnerable road user awareness message ("VAM") for VRU awareness message.

The VAM may contain all required data depending on a VRU profile and actual environmental conditions. The data elements in the VAM may be as described in Table 2.

**Table 2**

| **Parameter** | | **Comments** |
|---|---|---|
| VAM header including VRU identifier | M | |
| VRU position | M | |
| Generation time | M | |
| VRU profile | M | |
| VRU type | M | e.g. VRU profile is pedestrian, VRU type is infant, animal, adult, child, etc. |
| VRU cluster identifier | O | |
| VRU cluster position | O | |
| VRU cluster dimension | O | geographical size |
| VRU cluster size | O | number of members in the cluster |
| VRU size class | C | mandatory if outside a VRU cluster, optional if inside a VRU cluster |
| VRU weight class | C | mandatory if outside a VRU cluster, optional if inside a VRU cluster |
| VRU speed | M | |
| VRU direction | M | |
| VRU orientation | M | |
| Predicted trajectory | O | succession of way points |
| Predicted velocity | O | including 3D heading and average speed |
| Heading change indicators | O | turning left or turning right indicators |
| Hard braking indicator | O | |
| NOTE: "M" stands for "mandatory" which means that the data element shall be always included in the VAM message. "O" stands for "optional" which means that the data element can be included in the VAM message. "C" stands for "conditional" which means that the data element shall be included in the VAM message under certain conditions. | | |

In certain embodiments, such as for V2P communications (e.g., VRU), CPM messages may be used as input for triggering an action at an application layer of a device (e.g., activating a VRU application). This may help for detecting a VRU at risk. For example, in a vehicle, reception of CPM may signal the presence of a vehicle crossing a VRU predicted trajectory. This may be correlated with information received from local sensors.

In some embodiments, a cooperative awareness message ("CAM") [may be a message exchanged in an ITS network between ITS-Ss to create and maintain awareness of each other and to support cooperative performance of vehicles using a road network. A CAM may contain status and attribute information of an originating intelligent transportation system ("ITS") station ("ITS-S"). The content may vary depending on a type of the ITS-S. For a vehicle, status information may include time, position, motion state, and/or activated systems, and attribute information may include data about dimensions, a vehicle type, and/or a role in road traffic.

In various embodiments, a decentralized environmental notification message ("DENM") may be an event based message to notify about an incident, risk, and/or accident.

In certain embodiments, a basic safety message ("BSM") may be a message used in a variety of applications to exchange safety data regarding a vehicle state.

In some embodiments, V2P applications may exchange different messages based on a scenario (e.g., VRU zones vs highways). In various embodiments, a transmission mode may be different (e.g., unicast, groupcast, broadcast) as well as a periodicity and/or area for sending messages.

In various embodiments, a pedestrian UE may deploy multiple applications related to a VRU which may have differentiated traffic and/or QoS requirements as well as transmission and/or reception schedules. In such embodiments, traffic patterns may be aligned with a DRX cycle. As used herein QoS requirements may refer to application quality of service requirements which may be defined as end-to-end requirements for application services - which may be measured between two applications. Such requirements may be, for example, in the form of latency, reliability, data rate, jitter, communication range, service availability, coverage, and/or other parameters. Moreover, QoS requirements may be application and/or network QoS requirements. Network QoS requirements may be defined as required QoS attributes or key performance indicators (which may form a QoS profile as defined in 3GPP TS 23.501) over a communication network interface. Such attributes may relate to a required latency, a packet error rate, a data rate, a jitter, and/or other parameters. Furthermore, QoE requirements may have a definition provided at ITU-T P.1203.3. QoE requirements may be equivalent to expected QoE targets which are calculated at an application layer and may refer to a video related QoE score, an MOS score (video MOS or customized), initial buffering, stalling events, stall ratio, and/or other parameters. The expected QoE targets may be pre-defined; however, in similar manner to QoS, different targets may be negotiated at an SLA agreement between an MNO and a vertical and/or customer.

In certain embodiments, a pedestrian UE may be energy constrained and may benefit from DRX. In such embodiments, safety may be maintained while power consumption is at low levels.

In some embodiments, a pedestrian UE may also have Uu-based communications for non-V2X services. In such embodiments, coordinating a UE to network communication interface ("Uu") and PC5 DRX cycles may be performed to facilitate V2X and non-V2X service requirements.

In various embodiments, a V2X application at a pedestrian UE may be activated (or be dependent) by other V2X applications (e.g., sensor data, positioning information, events). In such embodiments, there may be a dynamic adaptation of an application and/or communication traffic pattern which may require dynamic adaption of QoS requirements and a DRX cycle.

Described herein may be various embodiments used to optimally configure a DRX cycle and/or application transmission cycle based on application V2P requirements and transmission modes.

As used herein, an edge enabler server ("EES") may provide supporting functions needed for edge application servers and edge enabler clients, such as: a) providing configuration information to an edge enabler client, enabling exchange of application data traffic with an edge application server; b) interacting with a 3GPP core network for accessing capabilities of network functions either directly (e.g., via PCF) or indirectly (e.g., via service capability enabler function ("SCEF"), NEF, and/or SCEF+NEF); and/or c) supporting external exposure of 3GPP network capabilities to edge application servers over EDGE-3.

Moreover, an edge enabler client ("EEC") provides supporting functions needed for application clients, such as retrieval and provisioning of configuration information to enable the exchange of application data traffic with an edge application server; and discovery of edge application servers available in an edge data network. As used herein, an application enabler client (e.g., enabler client) may take the form of a V2X application enabler client, a SEAL client, an EEC, and/or any other vehicle-specific enabler client. Moreover, an application enabler server may take the form of a V2X application enabler server, a SEAL server, an edge enabler server, and/or any other vertical-specific enabler server.

Further, an edge configuration server ("ECS") provides supporting functions needed for an EEC to connect with an EES. The functions of an ECS may be related to providing edge configuration information to the EEC which is used for establishing connection with an EES.

As used herein, an edge application server ("EAS") may be an application server resident in an edge data network performing server functions.

Moreover, an application client ("AC") may be an application resident in a UE performing a client function.

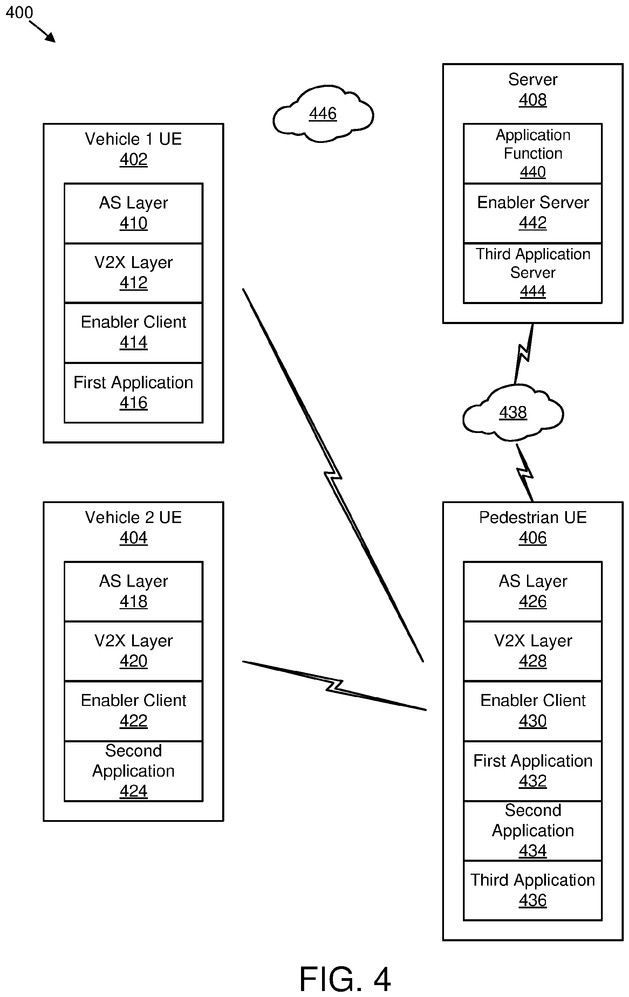

Figure 4 is a schematic block diagram illustrating one embodiment of a communication system 400. The communication system 400 includes a vehicle 1 UE 402, a vehicle 2 UE 404, a pedestrian UE 406, and a server 408. The vehicle 1 UE 402 includes an AS layer 410, a V2X layer 412, an enabler client 414, and a first application 416. Moreover, the vehicle 2 UE 404 includes an AS layer 418, a V2X layer 420, an enabler client 422, and a second application 424. Further, the pedestrian UE 406 includes an AS layer 426, a V2X layer 428, an enabler client 430, a first application 432, a second application 434, and a third application 436. The pedestrian UE 406 may communicate with the server 408 via a core cloud 438. The server 408 includes an application function 440, an enabler server 442, and a third application server 444. As may be appreciated, the first application 416 of the vehicle 1 UE 402 may communicate with the first application 432 of the pedestrian UE 406, the second application 424 of the vehicle 2 UE 404 may communicate with the second application 434 of the pedestrian UE 406, and the third application 444 of the server 408 may communicate with the third application 436 of the pedestrian UE 406. A V2P configuration function 446 may provide configuration information to one or more of the vehicle 1 UE 402, the vehicle 2 UE 404, the pedestrian UE 406, and the server 408.

The communication system 400 may be considered a wireless communication system in which the UEs are equipped with transceivers and applications (e.g., end applications or middleware applications). Moreover, in the communication system 400, network nodes may be base stations ("BSs"), RAN nodes, and/or core network nodes. Communication between end devices as well as device-to-network in the communication system 400 may be via cellular access (e.g., sidelink, uplink, downlink). The pedestrian UE 406 may host V2X applications like VRU-related apps and may interact in different ways with the other nodes (e.g., unicast, groupcast, broadcast).

In various embodiments, communications apply DRX for minimizing energy consumption of a UE when data are not expected. Also, in the communication system 400, the server 408 is interacting with network nodes for consuming network services and for providing application requirements to the underlying network. In certain embodiments, a DRX cycle needs to be coordinated with an application transmission cycle (or application traffic pattern) and this may require that periodicity of message exchange be known at application entities. Otherwise (if the traffic is generated based on an event), the server 408 or the network may need to make sure that receiving UEs are awake and able to listen to a downlink and/or side-link channel.

In Figure 4, the pedestrian UE 406 has three applications (e.g., the first application 432 is a collective perception message ("CPM"), the second application 434 is a VAM, the third application 436 is sensor sharing). Some applications may have different traffic patterns and QoS characteristics and different expected receiving entities. If a UE is not receiving data it is expected to go to sleep to save battery power. However, the UE being put to sleep may need to be coordinated (e.g., a way for configuring application traffic pattern to DRX mapping for V2P communications). As used herein an application traffic pattern may be an expected transmission and/or reception of an application message (e.g., V2X message) over a pre-defined time window. The application traffic pattern may be in the form of a time instances during which it is expected to transmit and/or receive messages, time intervals between transmissions and/or receptions, a number of retransmissions over a time window, a priority of messages, a size of the message, a burstiness of traffic, and/or a periodicity and/or aperiodicity of traffic.

In some embodiments, there may be a configuration of a transmission schedule for V2P communications based on application QoS requirements and an energy optimization target and/or objective at the pedestrian UE 406. In such embodiments, a V2P configuration functionality and/or capability at a middleware layer (e.g., application or network entity) may determine mapping of an application traffic pattern to a DRX cycle per application traffic, per interface (e.g., Uu, PC5), and per transmission mode (e.g., unicast, groupcast, broadcast). In certain embodiments, an entity may perform the following: 1) receiving application requirements including a traffic pattern for all involved applications of a pedestrian UE; 2) obtaining an energy efficiency target (e.g., from end apps) and UE energy monitoring information for the pedestrian UE; 3) determining a traffic communication pattern for one or more applications and for each interface based on one or more of the following: application requirements, context, monitored energy, a configured PC5 DRX cycle, and/or a transmission mode - the application may indicate application requirements and a mode of transmission - otherwise, this is taken from a service type pre-configuration - a) this determination may be performed at an entity at the device side, or at a server entity, b) this determination may be a one-shot optimization, or a distributed and/or iterative optimization which includes negotiation with other middleware entities, c) this determination may result in the configuration of policies for parameterizing a DRX state machine (e.g., at an AS layer of the UEs) - the DRX configuration as a state machine (e.g., states for on- and off- period per application requirements); 4) mapping the determined traffic communication pattern to a QoS requirement or one or more DRX and/or AS layer configuration parameters for one or more applications of one or more UEs and interfaces (e.g., Uu, PC5); and/or 5) sending the determined traffic communication pattern parameters, the DRX parameters, and/or the QoS requirement for involved UEs, applications, and/or network entities. As used herein, a traffic communication pattern may be a a transmission and/or reception schedule and may be the outcome of a mapping of application QoS requirements and/or an application traffic pattern to communication over radio resources (e.g., in terms of time schedule, frequency band schedule, etc.), radio interfaces (e.g., uplink, downlink, sidelink), and/or transmission modes.

In various embodiments, a VRU configuration function may be defined as an entity that provides different methods described herein. The VRU configuration function ("VRU-CF") may be a mobile edge computing ("MEC") platform capability, a functionality of an EES and/or an ECS, a functionality of an EEC, a V2X information service ("VIS") functionality, a radio network information service ("RNIS") functionality, and/or a standalone functionality at a network or application layer.

In certain embodiments, a VRU-CF may initially receive an application traffic communication pattern from an MEC application and/or edge application server. The application traffic communication pattern may be for applications related to both Uu-based and PC5-based communications.

In some embodiments, the VRU-CF triggers a query for capturing DRX configurations supported by a Uu and/or a vehicle to everything communication interface ("PC5") in an area and for different transmission modes (e.g., if this information is already known). In one example, a UE enters a VRU cluster and/or group, and the VRU-CF wants to know what DRX cycle is used for the group communication. This may help the VRU-CF to determine a different transmission pattern or to ask an adaptation of DRX cycles to align.

In various embodiments, a query may be sent to VIS or RNIS services and forwarded to a V2X layer and/or AS layer of a pedestrian UE. If the VRU-CF is equivalent to the VIS or RNIS, then an exchange may be directed to the V2X layer. It may be also possible that the query is forwarded to the AS layer via the V2X layer.

In certain embodiments, the V2X layer and/or the AS layer provide a response to the query by mentioning the DRX cycle for Uu and PC5 and for different transmission modes (e.g., unicast, groupcast, broadcast)

In some embodiments, the VRU-CF processes the response and/or report from the V2X layer, and, taking into account the application traffic communication pattern received initially, and also some key performance indicator ("KPI") metric (e.g., performance, energy efficiency target) and a UE context (e.g., battery status), the VRU-CF decides to: 1) update the transmission pattern for each application based on the supported DRX cycles for each transmission mode and interface (e.g., Uu, PC5); 2) trigger a DRX configuration update that may be enforced at the AS layer and/or the V2X layer - this may be for Uu and/or PC5; and/or 3) align DRX transmissions by requesting to align the QoS of affected applications.

In various embodiments, the VRU-CF sends a traffic pattern adaption to the UE via either EEC (e.g., if the UE is edge aware and includes EEC functionality) or via the V2X layer. If the decision affects the DRX cycles, the V2X layer further interacts with the AS layer and/or RAN to update the DRX cycle. Otherwise, the decision is kept at the V2X layer, EEC, and/or AC and, if a new V2X message comes from the AC, then it is transmitted based on the updated pattern.

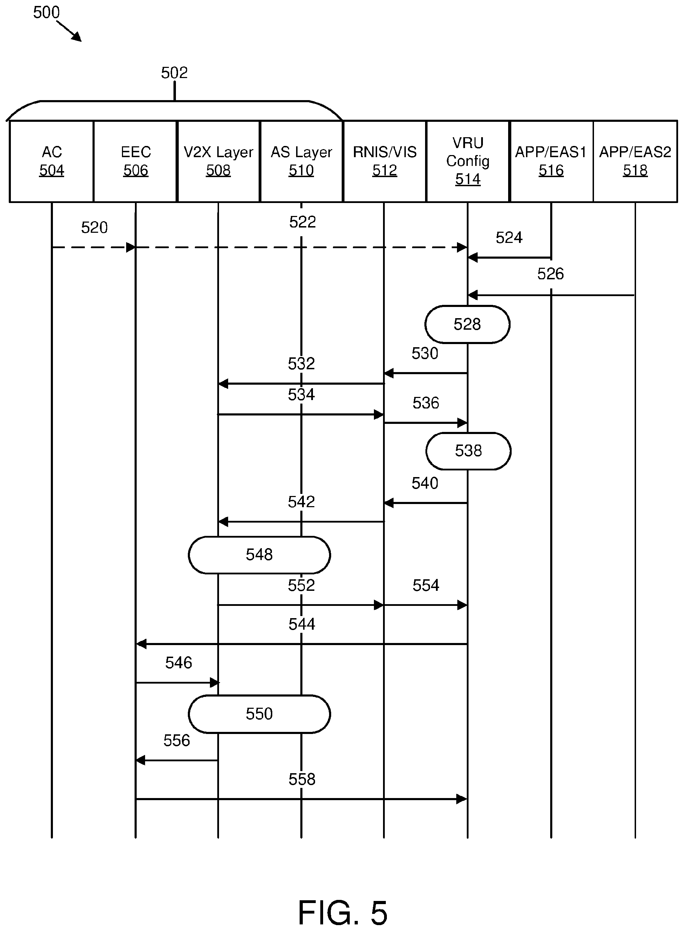

Figure 5 is a communications diagram illustrating one embodiment of communications 500 for traffic communication pattern mapping. The communications 500 include messages transmitted between a pedestrian UE 502 including an application client ("AC") 504 (e.g., AC1, AC2), an EEC 506, a V2X layer 508, and an AS layer 510; an RNIS/VIS 512; a VRU configuration function ("VRU-CF") 514 (e.g., VRU config, EES, and/or ECS); an application ("APP")/EAS1 516 (e.g., MEC V2X APP, EAS); and an APP/EAS2 518 (e.g., V2X server, EAS). Each of the communications 500 may include one or more messages.

In an optional first communication 520 transmitted from the AC 504 to the EEC 506 and an optional second communication 522 transmitted from the EEC 506 to the VRU-CF 514, the AC 504 (e.g., AC1) provides V2X application requirements (e.g., application traffic pattern for a first application) to the VRU-CF 514 via the EEC 506 or via application layer signaling.

Alternatively, in an optional third communication 524 transmitted from the APP/EAS1 516 to the VRU-CF 514 and an optional fourth communication 526 transmitted from the APP/EAS2 518 to the VRU-CF 514, the APP/EAS1 516 and the APP/EAS2 518 (e.g., app#1 and app#2 server, may be one or more edge or regional V2X servers) send application traffic patterns to the VRU-CF 514. Any of the first communication 520, the second communication 522, the third communication 524, and/or the fourth communication 526 may include passing of KPIs for the application traffic, energy efficiency metrics and information on corresponding to the VRU (e.g., area, clusters, etc.), and/or one or more of: AC ID, EAS ID, traffic pattern, service type, application type, and/or KPIs.

The VRU-CF 514 triggers 528 a query for capturing DRX configurations supported by Uu and/or PC5 in an area and for different transmission modes (e.g., if this information is already known).

In a fifth communication 530 transmitted from the VRU-CF 514 to the RNIS/VIS 512, the VRU-CF 514 sends a query message to the RNIS/VIS 512 including an identification of a requester (e.g., EES/ECS ID), an application ID, an interface for which a request applies (e.g., PC5, Uu), a RAN entity/function ID, a mode of transmission (e.g., unicast, groupcast, broadcast), and/or requested DRX parameters (e.g., off/on periods, DRX configuration ID).

In a sixth communication 532 transmitted from the RNIS/VIS 512 to the V2X layer 508, the RNIS/VIS 512 sends a query message to the V2X layer 508. The sixth communication 532 may include similar information to the fifth communication 530 (e.g., any abstraction and/or compressed version of the fifth communication 530).

In a seventh communication 534 transmitted from the V2X layer 508 to the RNIS/VIS 512 and an eighth communication 536 transmitted from the RNIS/VIS 512 to the VRU-CF 514, the V2X layer 508 retrieves and authorize exposure of information (e.g., information transmitted in the fifth communication 530 and/or the sixth communication 532, or may interact with the AS layer 510 to retrieve information) and sends a DRX config response and/or report to the VRU-CF 514 via the RNIS/VIS 512. The report may include requested DRX parameters (based on the request of the fifth communication 530 and/or the sixth communication 532).

In some embodiments, the fifth communication 530, the sixth communication 532, the seventh communication 534, and/or the eighth communication 536 may be transmitted between the VRU-CF 514, the EEC 506, and the V2X layer 508.

The VRU-CF 514 processes 538 the response and/or report from the V2X layer 508, and taking into account the application traffic communication pattern initially received, some KPI metric (e.g., performance, energy efficiency target), and/or a UE context (e.g., battery status), the VRU-CF 514 decides to: 1) update the transmission pattern for each application based on the supported DRX cycles for each transmission mode and interface (e.g., Uu, PC5); 2) trigger a DRX configuration update that may be enforced at the AS layer 510 and/or the V2X layer 508 - this may be for Uu and/or PC5; and/or 3) align DRX transmissions by requesting to align a QoS of affected applications.

In a ninth communication 540 transmitted from the VRU-CF 514 to the RNIS/VIS 512 and a tenth communication 542 transmitted from the RNIS/VIS 512 to the V2X layer 508 or in an eleventh communication 544 transmitted from the VRU-CF 514 to the EEC 506 and in a twelfth communication 546 transmitted from the EEC 506 to the V2X layer 508, the VRU-CF 514 sends a transmission and/or reception pattern adaption message to the V2X layer 508 directly (e.g., via the RNIS/VIS 512 if the VRU-CF 514 is not a functionality of the RNIS/VIS 512) or vie the EEC 506 (e.g., if a UE is edge-aware and the EEC 506 is configured to provide this information to the V2X layer 508). These messages may include: an application ID, a VRU-CF identifier ("ID") (e.g., EES/ECS ID), an old Tx/Rx pattern, a new Tx/Rx pattern, a Tx/Rx pattern to DRX pattern mapping table, UE-IDs for which this applies (e.g., if there are multiple affected VRU users), a cluster for which this applies (e.g., if there is a VRU cluster), and/or an area and time of validity. The VRU-CF 514 may align DRX transmissions by requesting to align a QoS of affected applications.

The V2X layer 508 and the AS layer 510 may perform a DRX adaptation 548 or 550 (e.g., update a DRX cycle, if a decision affects DRX cycles).

In a thirteenth communication 552 transmitted from the V2X layer 508 to the RNIS/VIS 512 and in a fourteenth communication 554 transmitted from the RNIS/VIS 512 to the VRU-CF 512, or in a fifteenth communication 556 transmitted from the V2X layer 508 to the EEC 506 and in a sixteenth communication 558 transmitted from the EEC 506 to the VRU-CF 512, a response and/or acknowledgment ("ACK") is sent to the VRU-CF 512 via the V2X layer 508 or via the EEC 506.

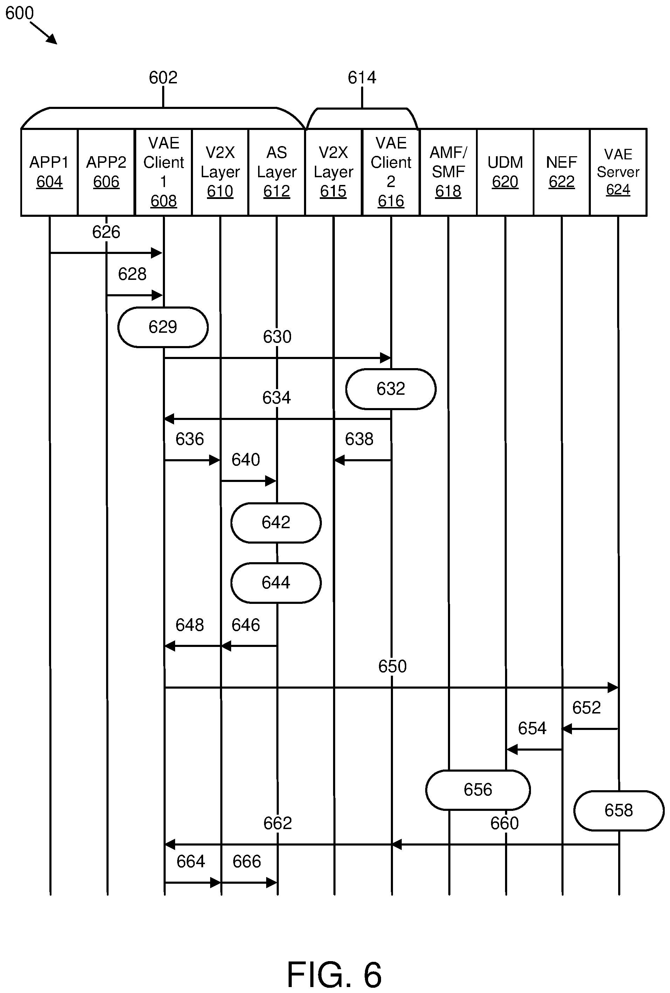

In certain embodiments of Figure 6, new MEC application programming interfaces ("APIs") (e.g., eVIS = enhanced VIS provided APIs) may be provided as shown in Table 3.

**Table 3**

| **API Name** | **API Operations** | **Known Consumer(s)** | **Communication Type** |
|---|---|---|---|
| eVIS_ApplicationRequirement API | Configure Traffic Pattern | V2X server, EAS, MEC app | Request/Response, Subscribe/Notify |
| | Notify Traffic Pattern | | |
| eVIS_DRX_config_info API | Query_DRX_config_info | VRU-CF, EES, ECS, EEC, MEC app | Query |
| | Notify_ DRX_config_info | | Task |
| eVIS_Traffic_Pattern Adaption API | Update_Traffic Pattern | VRU-CF, EES, ECS, EEC, MEC app | Request/Response |
| | Notify_Traffic_Pattern_update | | |

In some embodiments, coordinating an application traffic schedule with a DRX cycle may be triggered and/or exchanged over SA6-defined interfaces using a vertical enabler layer as a middleware functionality.

Figure 6 is a communications diagram illustrating another embodiment of communications 600 for traffic communication pattern mapping. The communications 600 include messages transmitted between a first UE 602 having a first V2X application 604 ("APP1"), a second V2X application 606 ("APP2"), a V2X application enabler ("VAE") client1 608, a V2X layer 610, and an AS layer 612; a second UE 614 having a V2X layer 615 and a VAE client2 616; an AMF/SMF 618; a UDM 620; a network exposure function ("NEF") 622; and a VAE server 624. Each of the communications 600 may include one or more messages.

In a first communication 626 transmitted from the APP1 604 to the VAE client1 608, the APP1 604 provides V2X application requirements to the VAE client1 608 (e.g., including delay requirements for a PC5 communication). For example, the APP1 604 may request a groupcast communication.

In a second communication 628 transmitted from the APP2 606 to the VAE client1 608, the APP2 606 provides V2X application requirements to the VAE client1 608 (e.g., including delay requirements and/or traffic pattern information for a PC5 communication). In one example, the APP2 606 may request a unicast communication.

VAE client1 608 consolidates 629 requirements from both applications (e.g., APP1 604 and APP1 606) and generates a UE level transmission schedule (e.g., communication traffic pattern) so that an off-duration is maximized. The determination of the UE level transmission schedule may be determined based on a configuration on the first UE 602 (e.g., energy efficiency target) and service KPIs. The first UE 602 may be configured by the VAE server 624 to act based on thresholds (e.g., defined by an application server).

In a third communication 630 transmitted from the VAE client1 608 to the VAE client2 616, the VAE client1 608 sends the generated UE level transmission schedule to the VAE client2 616 (e.g., in vicinity or in service-based group) to negotiate an optimal transmission pattern and/or inform about an expected reception pattern to be applied to the VAE client2 616.

The VAE client2 616 either accepts 632 or provides its transmission cycle or negotiates a traffic pattern. This depends on a relation between the first UE 602 and the second UE 604 and priorities (e.g., the first UE 602 may be a group lead). Then, in a fourth communication 634 transmitted from the VAE client2 616 to the VAE client1 608, the VAE client2 616 sends a positive or negative acknowledgement indicating the result as well as the expected and/or generated second UE 604 transmission pattern.

In a fifth communication 636 transmitted from the VAE client1 608 to the V2X layer 610 and in a sixth communication 638 transmitted from the VAE client2 616 to the V2X layer 615, the VAE client1 608 and the VAE client2 616 provide the updated traffic pattern as V2X application requirements to corresponding V2X layers 610 and 615 (e.g., including QoS requirements such as delay requirements, priority, etc. for the PC5 communication for both applications). The VAE client1 608 and the VAE client2 616 also may indicate a transmission mode (e.g., unicast, groupcast, broadcast) per application.

In a seventh communication 640 transmitted from the V2X layer 610 to the AS layer 612, the V2X layer 610 processes the requirements from the VAE client1 608, generates a UE level DRX schedule so that the first UE 602 may be able to maximize a DRX off-duration, and transmits a request of the UE level AS layer DRX schedule to the AS layer 612. Alternatively, in certain embodiments, the first UE 602 may be configured with a mapping of application traffic pattern to QoS requirements. The V2X layer 610 may provide the updated QoS requirements to the AS layer 612.

The AS layer 612 may generate 642 a UE level DRX schedule for group and/or unicast. The AS layer 612 applies 644 and/or configures the DRX schedule for the corresponding V2X communication (e.g., for group and/or unicast). This may require some adjustment according to AS layer configurations (e.g., radio resource pool settings).

In an eight communication 646 transmitted from the AS layer 612 to the V2X layer 610 and in a ninth communication 648 transmitted from the V2X layer 610 to the VAE client1 608, the AS layer 612 provides a response to the V2X layer 610 on the results of the DRX schedule enforcement at the AS layer 612. The V2X layer 610 may provide a response to the VAE client1 608 on the result.

In one option, in an eleventh communication 650 transmitted from the VAE client1 608 to the VAE server 624, the VAE client1 608 may further request from the VAE server 624 an alignment of a PC5 transmission cycle with a Uu transmission cycle to align DRX cycles accordingly. This may be in a form of a notification to the VAE server 624 which may trigger interaction with a 5G core network ("5GC") network. In one embodiment, the VAE client1 608 may provide traffic patterns of applications sending messages over Uu and over PC5. In an optional twelfth communication 652 transmitted from the VAE server 624 to the NEF 622 and in a thirteenth communication 654 transmitted from the NEF 622 to the UDM 620, the VAE server 624 acting as an application function ("AF") provides to the 5GC function (NEF 622) the updated application requirements for Uu-based communications including a different communication pattern, a new energy efficiency target, and/or requested DRX policy and/or parameters. The NEF 622 interacts 656 with the UDM 620 to update the UE behavior over Uu (e.g., and optionally PC5). The UDM 620 also interacts with the AMF/SMF 618. The AMF/SMF 618 may trigger the first UE 602 to initiate a registration request update (e.g., via UE configuration update) to provide the first UE 602 with the new DRX parameters over Uu (e.g., and optionally PC5).

In another option, in the eleventh communication 650 transmitted from the VAE client1 608 to the VAE server 624, the VAE client1 608 send to the VAE server 624 a request to align a PC5 transmission cycle with a Uu cycle. In one embodiment, the VAE client1 608 may provide traffic patterns of applications sending messages over Uu and over PC5.

The VAE server 624 updates 658 the transmission cycle for applications running on both Uu and PC5.

In a fourteenth communication 660 transmitted from the VAE server 624 to the VAE client2 616 and in a fifteenth communication 662 transmitted from the VAE client2 616 to the VAE client1 608, the VAE server 624 sends a response to the affected VAE clients with the instruction to update the traffic patterns for both Uu and PC5. This may include a new energy efficiency target, a new DRX policy and/or parameter, and/or updated QoS requirements for each application.

In a sixteenth communication 664 transmitted from the VAE client1 608 to the V2X layer 610 and in a seventeenth communication 666 transmitted from the V2X layer 610 to the AS layer 612, the VAE client1 608 sends a request to V2X layer 610 and/or the AS layer 612 with the new application requirements, and the AS layer 612 updates the DRX cycles accordingly. The first UE 602 may then indicate to align the Uu and/or PC5 DRX by interacting with the RAN.

In various embodiments, a PC5 DRX cycle change may trigger an adaptation of a transmission pattern to ensure that a pedestrian UE's application traffic is aligned with a supported cycle.

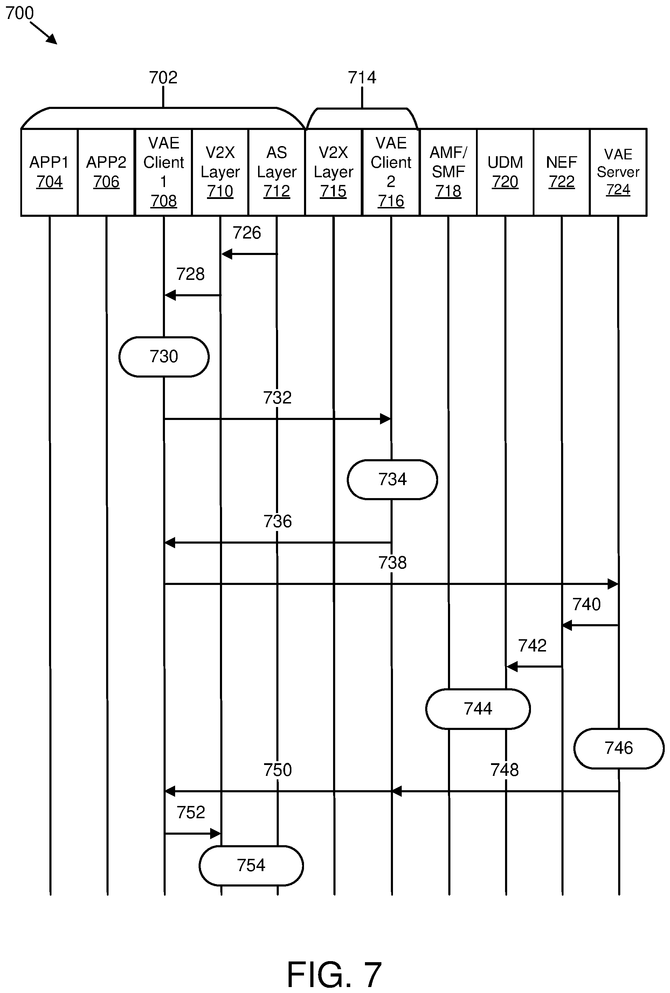

Figure 7 is a communications diagram illustrating a further embodiment of communications 700 for traffic communication pattern mapping. The communications 700 include messages transmitted between a first UE 702 having a first V2X application 704 ("APP1"), a second V2X application 706 ("APP2"), a VAE client1 708, a V2X layer 710, and an AS layer 712; a second UE 714 having a V2X layer 715 and a VAE client2 716; an AMF/SMF 718; a UDM 720; an NEF 722; and a VAE server 724. Each of the communications 700 may include one or more messages.

In a first communication 726 transmitted from the AS layer 712 to the V2X layer 710, the AS layer 710 provides an accepted and/or configured DRX cycle for NR-PC5 to the V2X layer 710.

In a second communication 728 transmitted from the V2X layer 710 to the VAE client1 708, the V2X layer 710 sends the updated communication traffic pattern to the VAE client1 708 for PC5 based on the accepted and/or configured DRX cycle.

The VAE client1 708 checks 730 the communication traffic pattern against the application traffic pattern and the application quality of service requirements over PC5, and generates an updated UE level transmission schedule (e.g., communication traffic pattern) so that a message sent in an off-period is avoided.

In a third communication 732 transmitted from the VAE client1 708 to the VAE client2 716, the VAE client1 708 sends the generated UE level transmission schedule to the VAE client2 716 (e.g., in the vicinity or in a service-based group) to negotiate an optimal transmission pattern and inform the VAE client2 716 about an expected reception pattern.

The VAE client2 716 either accepts 734 or provides its transmission cycle or negotiates a traffic pattern. This may depend on a relation between the first and second UEs 702 and 714 as well as priorities (e.g., the first UE 702 may be a group lead). Then, in a fourth communication 736 transmitted from the VAE client2 716 to the VAE client1 708, the VAE client2 716 sends a positive or negative acknowledgement indicating the result as well as the expected and/or generated second UE 714 transmission pattern.

In one embodiment, the VAE client1 708 and/or the VAE client2 716 provide an updated communication traffic pattern as V2X application requirements to corresponding V2X layers 710 and 715 and/or delay requirements for PC5 communication for both applications (e.g., APP1 704, APP2 706). The VAE client1 708 and/or the VAE client2 716 may also indicate a transmission mode (e.g., unicast, groupcast) per application.

In an optional fifth communication 738 transmitted from the VAE client1 708 to the VAE server 724, the VAE client1 708 may request from the VAE server 724 an alignment of a PC5 transmission cycle with a Uu transmission cycle to align DRX cycles accordingly (e.g., the PC5 DRX cycle is fixed). The fifth communication 738 may also be a notification to the VAE server 724 which may trigger interaction with a 5GC. In one embodiment, the VAE client1 708 may provide traffic patterns of applications sending messages over Uu and over PC5.

In an optional sixth communication 740 transmitted from the VAE server 724 to the NEF 722 and an optional seventh communication 742 transmitted from the NEF 722 to the UDM 720, the VAE server 724 acting as an AF provides to a 5GC function (e.g., NEF 722) the updated application requirements for Uu-based communications including a different pattern and/or a new requested DRX cycle.

The NEF 722 interacts 744 with the UDM 720 to update a UE behavior over Uu. The UDM 720 also interacts with the AMF/SMF 718. The AMF/SMF 718 may trigger a UE to initiate a registration request update (e.g., via UE configuration update) to provide the UE with the new DRX parameters over Uu.

In an optional fifth communication 738 transmitted from the VAE client1 708 to the VAE server 724, the VAE client1 708 may request from the VAE server 724 an alignment of a Uu transmission cycle with PC5 cycle. The VAE server 724 may adapt 746 Uu traffic patterns for applications.

In an eight communication 748 transmitted from the VAE server 724 to the VAE client2 716 and a ninth communication 750 transmitted from the VAE client2 716 to the VAE client1 708, the VAE server 724 updates the transmission cycle for applications running on Uu. The VAE server 724 sends a response to the affected VAE clients with an instruction to update the traffic patterns for Uu.

In a tenth communication 752 transmitted from the VAE client1 708 to the V2X layer 710, the VAE client1 708 transmits VAE client requirements (e.g., transmission schedule, updated traffic pattern for Uu).

The first UE 702 determines if a PC5 DRX and Uu DRX need alignment. If the alignment is necessary and the first UE 702 has an active connection to NG-RAN over Uu (e.g., in RRC_CONNECTED state), the V2X layer 710 triggers 754 radio resource control ("RRC") signaling towards NG-RAN. If the alignment is necessary between the PC5 DRX and Uu DRX (e.g., paging DRX) and the first UE 702 is in RRC_IDLE state or RRC_INACTIVE state, the first UE 702 waits until a Uu connection is established before initiating any alignment. Then, the first UE 702 sends RRC signaling over a Uu interface towards the NG-RAN informing the NG-RAN about the PC5 DRX setting.

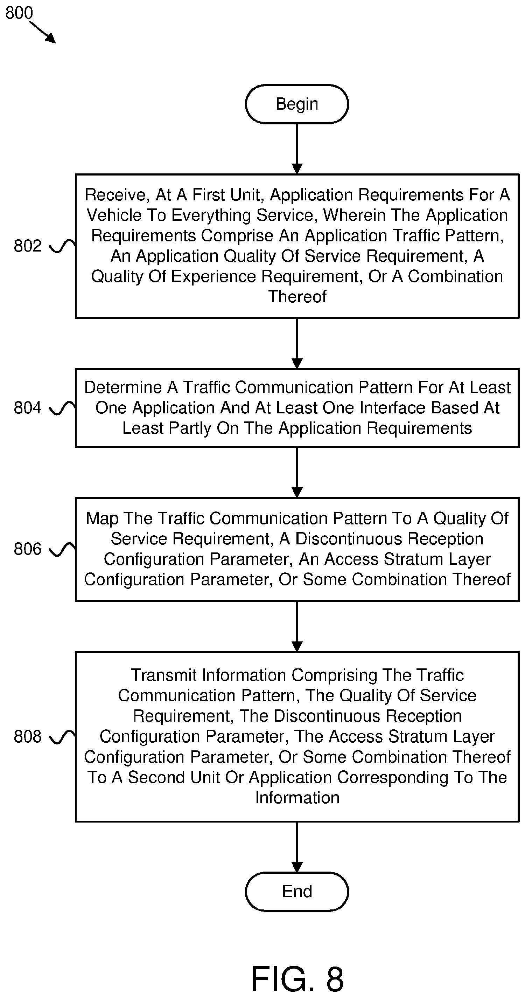

Figure 8 is a flow chart diagram illustrating one embodiment of a method 800 for traffic communication pattern mapping. In some embodiments, the method 800 is performed by an apparatus, such as the remote unit 102 and/or the network unit 104. In certain embodiments, the method 800 may be performed by a processor executing program code, for example, a microcontroller, a microprocessor, a CPU, a GPU, an auxiliary processing unit, a FPGA, or the like.

In various embodiments, the method 800 includes receiving 802, at a first unit, application requirements for a vehicle to everything service, wherein the application requirements comprise an application traffic pattern, an application quality of service requirement, a quality of experience requirement, or a combination thereof. In some embodiments, the method 800 includes determining 804 a traffic communication pattern for at least one application and at least one interface based at least partly on the application requirements. In various embodiments, the method 800 includes mapping 806 the traffic communication pattern to a quality of service requirement, a discontinuous reception configuration parameter, an access stratum layer configuration parameter, or some combination thereof. In certain embodiments, the method 800 includes transmitting 808 information comprising the traffic communication pattern, the quality of service requirement, the discontinuous reception configuration parameter, the access stratum layer configuration parameter, or some combination thereof to a second unit or application corresponding to the information.

In certain embodiments, the application traffic pattern comprises a schedule of an expected transmission of at least one vehicle to everything application message, a schedule of an expected reception of at least one vehicle to everything application message, an application traffic characteristic, or some combination thereof over a pre-defined time window. In some embodiments, the traffic communication pattern comprises a transmission schedule, a reception schedule, an inactivity period, a sleep period, or some combination thereof to communicate over radio resources, radio interfaces, transmission modes, or some combination thereof.

In various embodiments, determining the traffic communication pattern for the at least one application and the at least one interface based at least partly on the application requirements comprises determining the traffic communication pattern for the at least one application and the at least one interface further based on user equipment context information, a monitored energy consumption, a configured discontinuous reception cycle, a vehicle to everything transmission mode, or some combination thereof. In one embodiment, the method 800 further comprises triggering a discontinuous reception configuration query, wherein the discontinuous reception configuration query comprises a request for the configured discontinuous reception cycle, parameters for at least one radio interface of at least one radio access network, or a combination thereof.

In certain embodiments, the method 800 further comprises triggering a discontinuous reception configuration update for uplink, downlink, sidelink, or a combination thereof. In some embodiments, the method 800 further comprises triggering the discontinuous reception configuration update for unicast, groupcast, broadcast, or a combination thereof. In various embodiments, the method 800 further comprises aligning discontinuous reception transmissions based on a request to aligning quality of service requirements of a plurality of applications, radio interfaces, transmission modes, or a combination thereof.

In one embodiment, the first unit comprises a vulnerable road user configuration function, a vehicle to pedestrian configuration function, an application enabler client, an application enabler server, an edge configuration server, a mobile edge computing platform function, a mobile edge computing application, or a combination thereof. In certain embodiments, the second unit comprises a user equipment, an edge enabler client, a vehicle to everything layer, a vehicle to everything information service, a radio network information service, or a combination thereof. In some embodiments, receiving the application requirements for the vehicle to everything service comprises receiving the application requirements for the vehicle to everything service from a user equipment, a vehicle to everything application, a vehicle to everything server, a mobile edge computing application, a mobile edge computing application server, or some combination thereof.

In one embodiment, a method comprises: receiving, at a first unit, application requirements for a vehicle to everything service, wherein the application requirements comprise an application traffic pattern, an application quality of service requirement, a quality of experience requirement, or a combination thereof; determining a traffic communication pattern for at least one application and at least one interface based at least partly on the application requirements; mapping the traffic communication pattern to a quality of service requirement, a discontinuous reception configuration parameter, an access stratum layer configuration parameter, or some combination thereof; and transmitting information comprising the traffic communication pattern, the quality of service requirement, the discontinuous reception configuration parameter, the access stratum layer configuration parameter, or some combination thereof to a second unit or application corresponding to the information.

In certain embodiments, the application traffic pattern comprises a schedule of an expected transmission of at least one vehicle to everything application message, a schedule of an expected reception of at least one vehicle to everything application message, an application traffic characteristic, or some combination thereof over a pre-defined time window.

In some embodiments, the traffic communication pattern comprises a transmission schedule, a reception schedule, an inactivity period, a sleep period, or some combination thereof to communicate over radio resources, radio interfaces, transmission modes, or some combination thereof.

In various embodiments, determining the traffic communication pattern for the at least one application and the at least one interface based at least partly on the application requirements comprises determining the traffic communication pattern for the at least one application and the at least one interface further based on user equipment context information, a monitored energy consumption, a configured discontinuous reception cycle, a vehicle to everything transmission mode, or some combination thereof.

In one embodiment, the method further comprises triggering a discontinuous reception configuration query, wherein the discontinuous reception configuration query comprises a request for the configured discontinuous reception cycle, parameters for at least one radio interface of at least one radio access network, or a combination thereof.

In certain embodiments, the method further comprises triggering a discontinuous reception configuration update for uplink, downlink, sidelink, or a combination thereof.

In some embodiments, the method further comprises triggering the discontinuous reception configuration update for unicast, groupcast, broadcast, or a combination thereof.

In various embodiments, the method further comprises aligning discontinuous reception transmissions based on a request to aligning quality of service requirements of a plurality of applications, radio interfaces, transmission modes, or a combination thereof.

In one embodiment, the first unit comprises a vulnerable road user configuration function, a vehicle to pedestrian configuration function, an application enabler client, an application enabler server, an edge configuration server, a mobile edge computing platform function, a mobile edge computing application, or a combination thereof.

In certain embodiments, the second unit comprises a user equipment, an edge enabler client, a vehicle to everything layer, a vehicle to everything information service, a radio network information service, or a combination thereof.

In some embodiments, receiving the application requirements for the vehicle to everything service comprises receiving the application requirements for the vehicle to everything service from a user equipment, a vehicle to everything application, a vehicle to everything server, a mobile edge computing application, a mobile edge computing application server, or some combination thereof.

In one embodiment, an apparatus comprises a first unit. The apparatus further comprises: a receiver that receives application requirements for a vehicle to everything service, wherein the application requirements comprise an application traffic pattern, an application quality of service requirement, a quality of experience requirement, or a combination thereof; a processor that: determines a traffic communication pattern for at least one application and at least one interface based at least partly on the application requirements; and maps the traffic communication pattern to a quality of service requirement, a discontinuous reception configuration parameter, an access stratum layer configuration parameter, or some combination thereof; and a transmitter that transmits information comprising the traffic communication pattern, the quality of service requirement, the discontinuous reception configuration parameter, the access stratum layer configuration parameter, or some combination thereof to a second unit or application corresponding to the information.

In certain embodiments, the application traffic pattern comprises a schedule of an expected transmission of at least one vehicle to everything application message, a schedule of an expected reception of at least one vehicle to everything application message, an application traffic characteristic, or some combination thereof over a pre-defined time window.

In some embodiments, the traffic communication pattern comprises a transmission schedule, a reception schedule, an inactivity period, a sleep period, or some combination thereof to communicate over radio resources, radio interfaces, transmission modes, or some combination thereof.

In various embodiments, the processor determining the traffic communication pattern for the at least one application and the at least one interface based at least partly on the application requirements comprises the processor determining the traffic communication pattern for the at least one application and the at least one interface further based on user equipment context information, a monitored energy consumption, a configured discontinuous reception cycle, a vehicle to everything transmission mode, or some combination thereof.

In one embodiment, the processor triggers a discontinuous reception configuration query, and the discontinuous reception configuration query comprises a request for the configured discontinuous reception cycle, parameters for at least one radio interface of at least one radio access network, or a combination thereof.

In certain embodiments, the processor triggers a discontinuous reception configuration update for uplink, downlink, sidelink, or a combination thereof.

In some embodiments, the processor triggers the discontinuous reception configuration update for unicast, groupcast, broadcast, or a combination thereof.

In various embodiments, the processor aligns discontinuous reception transmissions based on a request to aligning quality of service requirements of a plurality of applications, radio interfaces, transmission modes, or a combination thereof.

In one embodiment, the first unit comprises a vulnerable road user configuration function, a vehicle to pedestrian configuration function, an application enabler client, an application enabler server, an edge configuration server, a mobile edge computing platform function, a mobile edge computing application, or a combination thereof.

In certain embodiments, the second unit comprises a user equipment, an edge enabler client, a vehicle to everything layer, a vehicle to everything information service, a radio network information service, or a combination thereof.

In some embodiments, the receiver receiving the application requirements for the vehicle to everything service comprises the receiver receiving the application requirements for the vehicle to everything service from a user equipment, a vehicle to everything application, a vehicle to everything server, a mobile edge computing application, a mobile edge computing application server, or some combination thereof.

Embodiments may be practiced in other specific forms. The described embodiments are to be considered in all respects only as illustrative and not restrictive. The scope of the invention is, therefore, indicated by the appended claims rather than by the foregoing description.

## Claims

1. A method performed by a first user equipment, UE, (602) comprising a vehicle to everything, V2X, application enabler, VAE, client (608), the method comprising:
receiving, at the VAE client (608) from each of at least one V2X application, corresponding application requirements (626, 628) for a V2X service, wherein the corresponding application requirements (626, 628) comprise an application traffic pattern;
determining, at the VAE client (608), a traffic communication pattern for the at least one V2X application and at least one interface by consolidating the corresponding application requirements (626, 628) so that an off-duration is maximized, wherein the traffic communication pattern comprises at least one of a transmission schedule, a reception schedule, an inactivity period or a sleep period to communicate over at least one of radio resources, radio interfaces or transmission modes;
mapping the traffic communication pattern to a discontinuous reception, DRX, schedule;
applying (644) the DRX schedule; and
transmitting information comprising at least one of the traffic communication pattern or the DRX schedule to a second unit or application corresponding to the information.

2. The method of claim 1, wherein the application traffic pattern comprises at least one of a schedule of an expected transmission of at least one V2X application message or a schedule of an expected reception of at least one V2X application message over a pre-defined time window.

3. The method of claim 1, wherein determining the traffic communication pattern for the at least one application and the at least one interface comprises determining the traffic communication pattern for the at least one application and the at least one interface further based on at least one of user equipment context information, a monitored energy consumption, a configured DRX cycle, a V2X transmission mode.

4. The method of claim 1, further comprising triggering a DRX configuration query, wherein the DRX configuration query comprises a request for at least one of the configured DRX cycle or parameters for at least one radio interface of at least one radio access network.

5. The method of claim 1, further comprising triggering a DRX configuration update for at least one of uplink, downlink or sidelink.

6. The method of claim 5, further comprising triggering the DRX configuration update for at least one of unicast, groupcast or broadcast.

7. The method of claim 1, further comprising aligning DRX transmissions based on a request to align quality of service requirements of at least one of a plurality of applications, radio interfaces or transmission modes.

8. The method of claim 1, wherein receiving the application requirements for the V2X service comprises receiving the application requirements for the V2X service from at least one of a V2X application, a V2X server, a mobile edge computing application or a mobile edge computing application server.

9. A user equipment, UE, (602), comprising a vehicle to everything, V2X, application enabler, VAE, client (608), the UE (602) comprising at least one processor (202) configured to cause the UE (602) to:
receive, at the VAE client (608) from each of at least one V2X application, corresponding application requirements (626, 628) for a V2X service, wherein the corresponding application requirements (626, 628) comprise an application traffic pattern;
determine, at the VAE client (608), a traffic communication pattern for the at least one V2X application and at least one interface by consolidating the corresponding application requirements (626, 628) so that an off-duration is maximized, wherein the traffic communication pattern comprises at least one of a transmission schedule, a reception schedule, an inactivity period or a sleep period to communicate over at least one of radio resources, radio interfaces or transmission modes;
map the traffic communication pattern to a discontinuous reception, DRX, schedule;
apply (644) the DRX schedule; and
transmit information comprising at least one of the traffic communication pattern or the DRX schedule to a second unit or application corresponding to the information.

10. The UE (602) of claim 9, wherein the at least one processor (202) is configured such that determining the traffic communication pattern for the at least one V2X application and the at least one interface by consolidating the corresponding application requirements comprises determining the traffic communication pattern for the at least one V2X application and the at least one interface further based on at least one of user equipment context information, a monitored energy consumption, a configured DRX cycle, or a V2X transmission mode

11. The UE (602) of claim 10, wherein the at least one processor (202) is configured to cause the UE (602) to trigger a DRX configuration query, wherein the DRX configuration query comprises a request for at least one of the configured DRX cycle, or parameters for at least one radio interface of at least one radio access network.

12. The UE (602) of claim 9, wherein the at least one processor (202) is configured to cause the UE (602) to trigger a DRX configuration update for at least one of uplink, downlink, or sidelink.

13. The UE (602) of claim 9, wherein the application traffic pattern comprises at least one of a schedule of an expected transmission of at least one V2X application message or a schedule of an expected reception of at least one V2X application message over a pre-defined time window.

14. The UE (602) of claim 9, wherein the at least one processor (202) is configured to cause the UE (602) to trigger the discontinuous reception configuration update for at least one of unicast, groupcast or broadcast.

## Patentansprüche

1. Verfahren, das durch ein erstes Benutzergerät (user equipment - UE) (602) durchgeführt wird, umfassend einen Vehicle-to-Everything(V2X)-Anwendungs-Enabler(VAE)-Client (608), wobei das Verfahren Folgendes umfasst:
Empfangen, an dem VAE-Client (608) von jeder von mindestens einer V2X-Anwendung, entsprechender Anwendungsanforderungen (626, 628) für einen V2X-Dienst, wobei die entsprechenden Anwendungsanforderungen (626, 628) ein Anwendungsverkehrsmuster umfassen;
Bestimmen, an dem VAE-Client (608), eines Verkehrskommunikationsmusters für die mindestens eine V2X-Anwendung und mindestens eine Schnittstelle durch Konsolidieren der entsprechenden Anwendungsanforderungen (626, 628), sodass eine Aus-Dauer maximiert wird, wobei das Verkehrskommunikationsmuster mindestens eines von einem Übertragungszeitplan, einem Empfangszeitplan, einer Inaktivitätsperiode oder einer Ruheperiode umfasst, um über mindestens eines von Funkressourcen, Funkschnittstellen oder Übertragungsmodi zu kommunizieren;
Abbilden des Verkehrskommunikationsmusters auf einen diskontinuierlichen Empfangs(DRX)-Zeitplan;
Anwenden (644) des DRX-Zeitplans; und
Übertragen von Informationen, die mindestens eines von dem Verkehrskommunikationsmuster oder dem DRX-Zeitplan umfassen, an eine zweite Einheit oder Anwendung, die den Informationen entspricht.

2. Verfahren nach Anspruch 1, wobei das Anwendungsverkehrsmuster mindestens eines von einem Zeitplan einer erwarteten Übertragung mindestens einer V2X-Anwendungsnachricht oder einem Zeitplan eines erwarteten Empfangs mindestens einer V2X-Anwendungsnachricht über ein vordefiniertes Zeitfenster umfasst.

3. Verfahren nach Anspruch 1, wobei das Bestimmen des Verkehrskommunikationsmusters für die mindestens eine Anwendung und die mindestens eine Schnittstelle das Bestimmen des Verkehrskommunikationsmusters für die mindestens eine Anwendung und die mindestens eine Schnittstelle ferner basierend auf mindestens einem von Benutzergerätekontextinformationen, einem überwachten Energieverbrauch, einem konfigurierten DRX-Zyklus, einem V2X-Übertragungsmodus umfasst.

4. Verfahren nach Anspruch 1, ferner umfassend das Auslösen einer DRX-Konfigurationsabfrage, wobei die DRX-Konfigurationsabfrage eine Anfrage für mindestens eines von dem konfigurierten DRX-Zyklus oder von Parametern für mindestens eine Funkschnittstelle mindestens eines Funkzugangsnetzes umfasst.

5. Verfahren nach Anspruch 1, ferner umfassend ein Auslösen einer DRX-Konfigurationsaktualisierung für mindestens eines von Uplink, Downlink oder Sidelink.

6. Verfahren nach Anspruch 5, ferner umfassend ein Auslösen der DRX-Konfigurationsaktualisierung für mindestens eines von Unicast, Groupcast oder Broadcast.

7. Verfahren nach Anspruch 1, ferner umfassend ein Abstimmen von DRX-Übertragungen basierend auf einer Anfrage zum Abstimmen der Qualität von Dienstanforderungen von mindestens einem von einer Vielzahl von Anwendungen, Funkschnittstellen oder Übertragungsmodi.

8. Verfahren nach Anspruch 1, wobei das Empfangen der Anwendungsanforderungen für den V2X-Dienst ein Empfangen der Anwendungsanforderungen für den V2X-Dienst von mindestens einem von einer V2X-Anwendung, einem V2X-Server, einer mobilen Edge-Computing-Anwendung oder einem mobilen Edge-Computing-Anwendungsserver umfasst.

9. Benutzergerät, UE, (602), umfassend einen Vehicle-to-Everything(V2X)-Anwendungs-Enabler(VAE)-Client (608), wobei das UE (602) mindestens einen Prozessor (202) umfasst, der konfiguriert ist, um das UE (602) zu Folgendem zu veranlassen:
Empfangen, an dem VAE-Client (608) von jeder von mindestens einer V2X-Anwendung, entsprechender Anwendungsanforderungen (626, 628) für einen V2X-Dienst, wobei die entsprechenden Anwendungsanforderungen (626, 628) ein Anwendungsverkehrsmuster umfassen;
Bestimmen, an dem VAE-Client (608), eines Verkehrskommunikationsmusters für die mindestens eine V2X-Anwendung und mindestens eine Schnittstelle durch Konsolidieren der entsprechenden Anwendungsanforderungen (626, 628), sodass eine Aus-Dauer maximiert wird, wobei das Verkehrskommunikationsmuster mindestens eines von einem Übertragungszeitplan, einem Empfangszeitplan, einer Inaktivitätsperiode oder einer Ruheperiode umfasst, um über mindestens eines von Funkressourcen, Funkschnittstellen oder Übertragungsmodi zu kommunizieren;
Abbilden des Verkehrskommunikationsmusters auf einen diskontinuierlichen Empfangs(DRX)-Zeitplan;
Anwenden (644) des DRX-Zeitplans; und
Übertragen von Informationen, die mindestens eines von dem Verkehrskommunikationsmuster oder dem DRX-Zeitplan umfassen, an eine zweite Einheit oder Anwendung, die den Informationen entspricht.

10. UE (602) nach Anspruch 9, wobei der mindestens eine Prozessor (202) so konfiguriert ist, dass das Bestimmen des Verkehrskommunikationsmusters für die mindestens eine V2X-Anwendung und die mindestens eine Schnittstelle durch Konsolidieren der entsprechenden Anwendungsanforderungen das Bestimmen des Verkehrskommunikationsmusters für die mindestens eine V2X-Anwendung und die mindestens eine Schnittstelle ferner basierend auf mindestens einem von Benutzergerätekontextinformationen, einem überwachten Energieverbrauch, einem konfigurierten DRX-Zyklus oder einem V2X-Übertragungsmodus umfasst.

11. UE (602) nach Anspruch 10, wobei der mindestens eine Prozessor (202) konfiguriert ist, um das UE (602) zu veranlassen, eine DRX-Konfigurationsabfrage auszulösen, wobei die DRX-Konfigurationsabfrage eine Anfrage für mindestens eines von dem konfigurierten DRX-Zyklus oder von Parametern für mindestens eine Funkschnittstelle mindestens eines Funkzugangsnetzes umfasst.

12. UE (602) nach Anspruch 9, wobei der mindestens eine Prozessor (202) konfiguriert ist, um das UE (602) zu veranlassen, eine DRX-Konfigurationsaktualisierung für mindestens eines von Uplink, Downlink oder Sidelink auszulösen.

13. UE (602) nach Anspruch 9, wobei das Anwendungsverkehrsmuster mindestens eines von einem Zeitplan einer erwarteten Übertragung mindestens einer V2X-Anwendungsnachricht oder einem Zeitplan eines erwarteten Empfangs mindestens einer V2X-Anwendungsnachricht über ein vordefiniertes Zeitfenster umfasst.

14. UE (602) nach Anspruch 9, wobei der mindestens eine Prozessor (202) konfiguriert ist, um das UE (602) zu veranlassen, die diskontinuierliche Empfangskonfigurationsaktualisierung für mindestens eines von Unicast, Groupcast oder Broadcast auszulösen.

## Revendications

1. Procédé mis en œuvre par un premier équipement utilisateur, UE, (602) comprenant un client (608) de facilitateur d'applications « Vehicle-to-Everything », V2X, VAE, le procédé comprenant :
la réception, au niveau du client VAE (608), à partir de chacune d'au moins une application V2X, d'exigences d'application correspondantes (626, 628) relatives à un service V2X, les exigences d'application correspondantes (626, 628) comprenant un profil de trafic d'application ;
la détermination, au niveau du client VAE (608), d'un modèle de communication de trafic pour l'au moins une application V2X et au moins une interface, par consolidation des exigences d'application correspondantes (626, 628), de manière à maximiser une durée d'inactivité, le modèle de communication de trafic comprenant au moins l'un parmi un calendrier de transmission, un calendrier de réception, une période d'inactivité ou une période de veille, afin de communiquer via au moins l'un parmi des ressources radio, des interfaces radio ou des modes de transmission ;
la mise en correspondance du modèle de communication de trafic avec un calendrier de réception discontinue, DRX ;
l'application (644) du calendrier DRX ; et
la transmission d'informations comprenant au moins l'un parmi le modèle de communication de trafic et le calendrier DRX à une deuxième unité ou application correspondant aux informations.

2. Procédé selon la revendication 1, dans lequel le modèle de trafic d'application comprend au moins l'un des éléments suivants : un calendrier de transmission attendue d'au moins un message d'application V2X ou un calendrier de réception attendue d'au moins un message d'application V2X au cours d'une fenêtre temporelle prédéfinie.

3. Procédé selon la revendication 1, dans lequel la détermination du modèle de trafic de communication pour l'au moins une application et l'au moins une interface comprend la détermination du modèle de trafic de communication pour l'au moins une application et l'au moins une interface en se basant en outre sur au moins l'un des éléments suivants : des informations de contexte relatives à l'équipement utilisateur, une consommation d'énergie surveillée, un cycle DRX configuré, un mode de transmission V2X.

4. Procédé selon la revendication 1, comprenant en outre le déclenchement d'une requête de configuration DRX, dans lequel la requête de configuration DRX comprend une demande concernant au moins l'un parmi le cycle DRX configuré ou des paramètres d'au moins une interface radio d'au moins un réseau d'accès radio.

5. Procédé selon la revendication 1, comprenant en outre le déclenchement d'une mise à jour de configuration DRX pour au moins l'une parmi une liaison montante, une liaison descendante ou une liaison latérale.

6. Procédé selon la revendication 5, comprenant en outre le déclenchement de la mise à jour de configuration DRX pour au moins l'un parmi une monodiffusion, une diffusion de groupe ou une diffusion générale.

7. Procédé selon la revendication 1, comprenant en outre l'alignement des transmissions DRX sur la base d'une demande visant à aligner des exigences de qualité de service d'au moins l'un parmi une pluralité d'applications, d'interfaces radio ou de modes de transmission.

8. Procédé selon la revendication 1, dans lequel la réception des exigences d'application relatives au service V2X comprend la réception des exigences d'application relatives au service V2X à partir d'au moins l'un parmi une application V2X, un serveur V2X, une application d'informatique en périphérie mobile ou un serveur d'application d'informatique en périphérie mobile.

9. Équipement utilisateur, UE, (602), comprenant un client (608) de facilitateur d'applications « Vehicle-to-Everything », V2X, VAE, l'UE (602) comprenant au moins un processeur (202) configuré pour amener l'UE (602) à :
recevoir, au niveau du client VAE (608), de chacune d'au moins une application V2X, des exigences d'application correspondantes (626, 628) relatives à un service V2X, les exigences d'application correspondantes (626, 628) comprenant un modèle de trafic d'application ;
déterminer, au niveau du client VAE (608), un modèle de communication de trafic pour l'au moins une application V2X et au moins une interface, par consolidation des exigences d'application correspondantes (626, 628) de manière à maximiser une durée d'inactivité, le modèle de communication de trafic comprenant au moins l'un parmi un calendrier de transmission, un calendrier de réception, une période d'inactivité ou une période de veille, afin de communiquer via au moins l'une parmi des ressources radio, des interfaces radio ou des modes de transmission ;
mettre en correspondance le modèle de communication de trafic avec un calendrier de réception discontinue, DRX ; et
appliquer (644) le calendrier DRX ; et
transmettre des informations comprenant au moins l'un parmi le modèle de communication de trafic et le calendrier DRX à une deuxième unité ou application correspondant aux informations.

10. UE (602) selon la revendication 9, dans lequel l'au moins un processeur (202) est configuré de telle sorte que la détermination du modèle de communication de trafic pour l'au moins une application V2X et l'au moins une interface par consolidation des exigences d'application correspondantes comprend la détermination du modèle de communication de trafic pour l'au moins une application V2X et l'au moins une interface en se basant en outre sur au moins l'un des éléments suivants : des informations de contexte relatives à l'équipement utilisateur, une consommation d'énergie surveillée, un cycle DRX configuré ou un mode de transmission V2X.

11. UE (602) selon la revendication 10, dans lequel l'au moins un processeur (202) est configuré pour amener l'UE (602) à déclencher une requête de configuration DRX, la requête de configuration DRX comprenant une demande concernant au moins l'un parmi le cycle DRX configuré ou des paramètres d'au moins une interface radio d'au moins un réseau d'accès radio.

12. UE (602) selon la revendication 9, dans lequel l'au moins un processeur (202) est configuré pour amener l'UE (602) à déclencher une mise à jour de configuration DRX pour au moins l'une parmi une liaison montante, une liaison descendante ou une liaison latérale.

13. UE (602) selon la revendication 9, dans lequel le modèle de trafic d'application comprend au moins l'un parmi un calendrier de transmission attendue d'au moins un message d'application V2X ou un calendrier de réception attendue d'au moins un message d'application V2X au cours d'une fenêtre temporelle prédéfinie.

14. UE (602) selon la revendication 9, dans lequel l'au moins un processeur (202) est configuré pour amener l'UE (602) à déclencher la mise à jour de la configuration de réception discontinue pour au moins l'une parmi une monodiffusion, une diffusion de groupe ou une diffusion générale.
